# EUROPEAN PATENT APPLICATION

(11) **EP 4 246 226 A1**
(43) Date of publication of application: **20.09.2023**
(21) Application number: 21890629.5
(22) Date of filing: 21.06.2021
(51) Int. Cl.: G03B 21/20

(54) **PROJECTION LIGHT PATH AND PROJECTION APPARATUS**

(30) Priority: 13.11.2020 CN 202022639082 U
(71) Applicant: Goertek Optical Technology Co., Ltd., Weifang, Shandong 261031 (CN)
(72) Inventor: GONG, Jingjian, Weifang, Shandong 261031 (CN); DENG, Yangchun, Weifang, Shandong 261031 (CN); DING, Weitao, Weifang, Shandong 261031 (CN); LIU, Dean, Weifang, Shandong 261031 (CN); LU, Gongtao, Weifang, Shandong 261031 (CN)
(74) Representative: ABG Intellectual Property Law, S.L.
(86) International application number: PCT/CN2021/101265
(87) International publication number: WO 2022/100098

(57) **Abstract**

Disclosed are a projection optical path and a projection device. The projection optical path comprises: a main optical path (1), which comprises a first light source (10) emitting a light with a first wavelength; and an auxiliary optical path (2), which comprises a second light source (20) emitting a light with a second wavelength, a third light source (30) emitting a light with a third wavelength, and a fourth light source (40) emitting a light with a fourth wavelength, wherein the light with the second wavelength, the light with the third wavelength and the light with the fourth wavelength are sequentially converged into the light with the first wavelength, wherein the light with the first wavelength, the light with the second wavelength and the light with the third wavelength are one of red light, green light, and blue light, respectively, wherein a wavelength range of the light with the fourth wavelength is within a wavelength range of the red light, and a wavelength of the light with the fourth wavelength is defined as λ1, and a wavelength of the red light among the light with the first wavelength, the light with the second wavelength and the light with the third wavelength is defined as X2, andλ1≠λ2; and an excitation light source (50) emitting an excitation light, wherein the excitation light is emitted to the first light source (10) or the second light source (20). The projection light path can not only reduce the red light thermal effect, but also improve the light emitting efficiency of the light source, such that the overall brightness of the protection screen is effectively improved.

## Description

This application claims the priority and benefits of Chinese Patent Application No. 202022639082.8, titled "PROJECTION OPTICAL PATH AND PROJECTION DEVICE", filed on November 13, 2020, which is incorporated by reference as if fully set forth herein.

### Technical Field

The present disclosure relates to the technical field of optical display, particularly, to a projection optical path and a projection device.

### Background Art

In optical projection display, a combination of red light, green light and blue light is used as a projection light source. In order to improve the brightness of the projection screen, it is necessary to increase the number of light rays of corresponding colors, that is, increase the luminous flux. The current method of increasing the luminous flux is to increase the current of corresponding power supply, so that light sources corresponding to the three colors can generate more light rays. However, the red light source is relatively sensitive to temperature, and when the current increases to a certain level, the amount of red light rays increases, resulting in a thermal effect, to this end, two kinds of red light sources are used to cooperate with each other, so as to reduce the thermal effect generated by the red light source. However, the light emitting efficiency of light sources having other colors is still low, and it is difficult to effectively improve the overall brightness of the projection screen.

### Summary

In view of the above, in order to solve the problem that in the existing projection light source, when two kinds of red light sources are used to cooperate with each other so as to reduce the thermal effect generated by the red light source, the light emitting efficiency of light sources having other colors is still relatively low and it is difficult to effectively improve the overall brightness of the projection screen, it is necessary to provide a projection optical path and a projection device capable of improving the light emitting efficiency of light sources while reducing the thermal effect generated by a red light source, thereby effectively improving the overall brightness of the projection screen.

In order to achieve the above object, the present disclosure provides a projection optical path, the projection optical path comprises:
a main optical path including a first light source emitting a light with a first wavelength;
an auxiliary optical path including a second light source emitting a light with a second wavelength, a third light source emitting a light with a third wavelength, and a fourth light source emitting a light with a fourth wavelength, wherein the light with the second wavelength, the light with the third wavelength and the light with the fourth wavelength are sequentially converged into the light with the first wavelength along an emitting direction of the light with the first wavelength, the light with the first wavelength, the light with the second wavelength and the light with the third wavelength have different colors, the light with the first wavelength, the light with the second wavelength and the light with the third wavelength are one of red light, green light, and blue light respectively, wherein a wavelength range of the light with the fourth wavelength is within a wavelength range of the red light, and a wavelength of the light with the fourth wavelength is defined as λ1, and a wavelength of the red light among the light with the first wavelength, the light with the second wavelength and the light with the third wavelength is defined as X2, and λ1≠λ2; and
an excitation light source emitting an excitation light, wherein the excitation light is emitted to the first light source, the second light source, the third light source or the fourth light source.

Optionally, the main optical path further includes a first beam splitter, the first beam splitter is disposed at a crossing position between the light with the second wavelength and the light with the first wavelength, and the excitation light source is disposed at a side of the first beam splitter away from the second light source;
the first light source is a green light source, a surface of the first beam splitter facing the excitation light source is provided with a reflective film for the excitation light, and the excitation light is reflected by the first beam splitter towards the first light source;
alternatively, the second source is a green light source, a surface of the first beam splitter facing the excitation light source is provided with an anti-reflecting film for the excitation light, and the excitation light is transmitted towards the second light source.

Optionally, an emitting direction of the light with the second wavelength is orthogonal to an emitting direction of the light with the first wavelength, the first beam splitter is disposed at a crossing position between the light with the second wavelength and the light with the first wavelength, a surface of the first beam splitter facing the first light source is provided with an anti-reflecting film for the light with the first wavelength, and a surface of the first beam splitter facing the second light source is provided with a reflective film for the light with the second wavelength.

Optionally, the main optical path further includes a second beam splitter, an emitting direction of the light with the third wavelength is orthogonal to an emitting direction of the light with the first wavelength, and the second beam splitter is disposed at a crossing position between the light with the third wavelength and the light with the first wavelength, a surface of the second beam splitter facing the first light source is provided with an anti-reflecting film for the light with the first wavelength and the light with the second wavelength, and a surface of the second beam splitter facing the third light source is provided with a reflective film for the light with the third wavelength.

Optionally, the main optical path further includes a third beam splitter, an emitting direction of the light with the fourth wavelength is orthogonal to the an emitting direction of the light with the first wavelength, and the third beam splitter is disposed at a crossing position between the light with the fourth wavelength and the light with the first wavelength; the main optical path further includes a first light emitting end surface, the first light emitting end surface is perpendicular to an emitting direction of the light with the first wavelength, and the light with the first wavelength, the light with the second wavelength and the light with the third wavelength are transmitted through the third beam splitter, and the light with the fourth wavelength is reflected by the third beam splitter, and the light with the first wavelength, the light with the second wavelength, the light with the third wavelength and the light with the fourth wavelength are converged by the third beam splitter, and the converged light of the light with the first wavelength, the light with the second wavelength, the light with the third wavelength and the light with the fourth wavelength is emitted from the first light emitting end surface.

Optionally, the light with the first wavelength is a green light, the light with the second wavelength is a blue light, and the light with the third wavelength is a red light, a surface of the third beam splitter facing the first light source is provided with an anti-reflecting film for the light with the first wavelength, the light with the second wavelength and the light with the third wavelength, a surface of the third beam splitter facing the fourth light source is provided with a reflective film for the light with the fourth wavelength, and λ1>λ2.

Optionally, the second light source, the third light source and the fourth light source are disposed on an upper side of an emitting optical path of the light with the first wavelength, and the excitation light source is disposed on a lower side of the emitting optical path of the light with the first wavelength.

Optionally, the excitation light source, the third light source and the fourth light source are disposed on an upper side of an emitting optical path of the light with the first wavelength, and the second light source is disposed on a lower side of the emitting optical path of the light with the first wavelength.

Optionally, the second light source and the fourth light source are disposed on an upper side of an emitting optical path of the light with the first wavelength, and the excitation light source and the third light source are disposed on a lower side of the emitting optical path of the light with the first wavelength.

Optionally, the second light source and the third light source are disposed on an upper side of an emitting optical path of the light with the first wavelength, and the excitation light source and the fourth light source are disposed on a lower side of the emitting optical path of the light with the first wavelength.

In addition, in order to achieve the above object, the present disclosure further provides a projection device, the projection device includes a housing and the above-mentioned projection optical path, wherein the projection optical path is disposed in the housing.

According to the technical solution of the present disclosure, the light with the first wavelength emitted by the first light source of the main optical path, and the light with the second wavelength emitted by the second light source, the light with the third wavelength emitted by the third light source and the light with the fourth wavelength emitted by the fourth light source of the auxiliary optical path are sequentially converged into the light with the first wavelength of the main optical path. The light with the first wavelength, the light with the second wavelength and the light with the third wavelength are one of red light, green light, and blue light, respectively, and the three color lights are combined to become a light source of the projection screen. The fourth light source is also a red light, as such, when increasing the brightness of the projection screen, the red color of the projection light source is provided by two light sources, so as to reduce the occurrence of the thermal effect generated by a single red light source, and reduce a problem of a sudden drop in the light emitting efficiency, to ensure that the projection light source can operate stably.

In addition, the red wavelength of the light with the fourth wavelength is different from the wavelength of red light in the first light source, the second light source or the third light source. Accordingly, the projection optical path can be divided into multiple paths for transmission, which reduces the mutual interference between the light with the fourth wavelength of the fourth light source and the red light in the other three light sources, and ensures that lights are converged at the same position and then emitted.

In addition, according to the technical solution that lights emitted by the light sources of the auxiliary optical path are sequentially emitted to the light of the main optical path, the lights emitted by the second light source, the third light source and the fourth light source in the auxiliary optical path can be prevented from converging with each other, thereby reducing the convergent light. The light sources in the auxiliary optical path are disposed around the main optical path, thereby simplifying the design of the optical path and allowing the projection optical path to be simpler. Furthermore, in the embodiment, the projection optical path is arranged in a strip shape, so that an installation space occupied by both sides of the main optical path can be reduced.

Further, the excitation light emitted by the excitation light source can improve the light emitting efficiency of the first light source, the second light source, the third light source or the fourth light source, thereby increasing the emitting amount of light rays and correspondingly improving the brightness of the projection screen.

### Brief Description of the Drawings

In order to explain the technical solutions of the embodiments of the present disclosure or in the prior art more clearly, the following will briefly illustrate the accompanying drawings required for the description of the embodiments or the prior art. Obviously, the drawings in the following description are only part of the drawings of the present disclosure, and for those skilled in the art, other drawings can also be obtained according to the provided drawings without any creative effort.
Fig. 1 is a structural schematic diagram of a projection optical path according to a first embodiment of the present disclosure;
Fig. 2 is a structural schematic diagram of a projection optical path according to a second embodiment of the present disclosure; and
Fig. 3is a structural schematic diagram of a projection optical path according to a third embodiment of the present disclosure;
Fig. 4 is a structural schematic diagram of a projection optical path according to a fourth embodiment of the present disclosure.

### Explanation of reference numerals

| Reference Numeral | Name | Reference Numeral | Name |
|---|---|---|---|
| 1 | main optical path | 620 | second collimating lens |
| 2 | auxiliary optical path | 710 | first beam splitter |
| 10 | first light source | 720 | second beam splitter |
| 20 | second light source | 730 | third beam splitter |
| 30 | third light source | 810 | first condenser lens |
| 40 | fourth light source | 820 | second condenser lens |
| 50 | excitation light source | 910 | first light emitting end surface |
| 60 | collimating lens group | 920 | second light emitting end surface |
| 610 | first collimating lens | | |

The realization, functional features and advantages of the present disclosure will be further described with reference to accompanying drawings in conjunction with the embodiments.

### Detailed Description of the Embodiments

The technical solutions of the embodiments of the present disclosure will be described below with reference to the drawings. Obviously, the described embodiments are only part of the embodiments of the present disclosure, rather than all the embodiments. Based on the embodiments according to the present disclosure, all other embodiments obtained by persons of ordinary skill in the art without creative efforts shall fall within the protection scope of the present disclosure.

In optical projection display, a combination of red light, green light and blue light is used as a projection light source. In order to improve the brightness of the projection screen, the current of corresponding power supply is generally increased, so that light sources corresponding to the three colors can generate more light rays. However, the red light source is relatively sensitive to temperature, and when the current increases to a certain level, the amount of red light increases, resulting in a thermal effect. To this end, two kinds of red light sources are used to cooperate with each other, so as to reduce the thermal effect generated by the red light source. However, the light emitting efficiency of light sources having other colors is still low, and it is difficult to effectively improve the overall brightness of the projection screen.

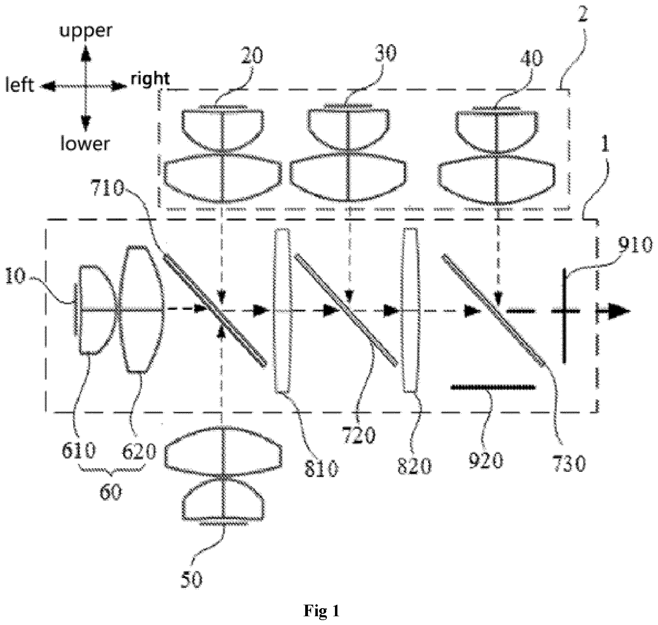

In order to solve the above problems, referring to Fig. 1, the present disclosure provides a projection optical path, which includes a main optical path 1, an auxiliary optical path 2 and an excitation light source 50. The main optical path 1 includes a first light source 10 emitting a light with a first wavelength, the auxiliary optical path 2 includes a second light source 20 emitting a light with a second wavelength, a third light source 30 emitting a light with a third wavelength, and a fourth light source 40 emitting a light with a fourth wavelength, wherein the light with the second wavelength, the light with the third wavelength and the light with the fourth wavelength are sequentially converged into the light with the first wavelength along emitting direction of the light with the first wavelength, wherein the light with the first wavelength, the light with the second wavelength and the light with the third wavelength have different colors, the light with the first wavelength, the light with the second wavelength and the light with the third wavelength are one of red light, green light, and blue light respectively, that is, when the light with the first wavelength is a green light, the light with the second wavelength may be a red light, and the light with the third wavelength may be a blue light; or, when the light with the first wavelength is a green light, the light with the second wavelength may be a blue light, and the light with the third wavelength may be a red light. Alternatively, when the light with the first wavelength is a red light, the light with the second wavelength may be a green light, and the light with the third wavelength may be a blue light; or, when the light with the first wavelength is a red light, the light with the second wavelength may be a blue light, and the light with the third wavelength may be a green light. Alternatively, when the light with the first wavelength is a blue light, the light with the second wavelength may be a green light, and the light with the third wavelength may be a red light; or, when the light with the first wavelength is a blue light, the light with the second wavelength may be a red light, and the light with the third wavelength may be a green light. The colors of the light with the first wavelength, the light with the second wavelength and the light with the third wavelength are selected from red light, green light and blue light, and the colors of the lights with the three wavelength are different from each other. A wavelength range of the light with the fourth wavelength is a wavelength range of the red light; a wavelength of the light with the fourth wavelength is defined as λ1, and a wavelength of the one among the light with the first wavelength, the light with the second wavelength and the light with the third wavelength set as the red light is λ2, and equation of λ1≠λ2 is satisfied. As an example, the wavelength of red light is in a range between 600 nm and 740 nm, if the light with the first wavelength is a red light, and the wavelength λ2 of the light with the first wavelength is 620 nm, then the wavelength λ1 of the light with the fourth wavelength is 650 nm. As another example, if the wavelength λ2 of the light with the first wavelength is 625 nm, the wavelength λ1 of the light with the fourth wavelength is 660 nm.

Wherein, the first light source 10, the second light source 20, the third light source 30 and the fourth light source 40 may be light-emitting diodes (LEDs), or may be laser diodes (LDs), or may also be super luminescent diodes (SLDs).

An excitation light source 50 emits an excitation light, and the excitation light is emitted to the first light source 10, the second light source 20, the third light source 30 or the fourth light source 40. The excitation light source 50 is a pumping lamp. For example, the excitation light is a blue light, and the blue excitation light is emitted to the first light source 10, the second light source 20, the third light source 30 and the fourth light source 40, thereby increasing the fluorescent molecules of corresponding light source, and accordingly increasing the emitting amount of light rays of corresponding light source.

In addition, it is known to those skilled in the art that the light emitted by any light source is a light beam with a certain wavelength range, therefore the light with the first wavelength in the present disclosure refers to a light beam with the first wavelength as a dominant wavelength, and the wavelength of the light with the first wavelength in the present disclosure refers to the dominant wavelength of the light with the first wavelength. Correspondingly, the same is adopted to the light with the second wavelength, the light with the third wavelength and the light with the fourth wavelength. Wherein, the dominant wavelength may also be understood as a central wavelength.

According to the technical solution of the present disclosure, the light with the first wavelength emitted by the first light source 10 of the main optical path 1, and the light with the second wavelength emitted by the second light source 20, the light with the third wavelength emitted by the third light source 30 and the light with the fourth wavelength emitted by the fourth light source 40 of the auxiliary optical path 2 are sequentially converged into the light with the first wavelength of the main optical path 1. The light with the first wavelength, the light with the second wavelength, and the light with the third wavelength are one of red light, green light, and blue light, respectively, and the three color lights are combined to become a light source of the projection screen. The fourth light source 40 is also a red light, as such, when increasing the brightness of the projection screen, and the red color of the projection light source is provided by two light sources, so as to reduce the occurrence of the thermal effect generated by a single red light source, and reduce a problem of a sudden drop in the light emitting efficiency, to ensure that the projection light source can operate stably.

In addition, the red wavelength of the light with the fourth wavelength is different from the wavelength of red light in the first light source 10, the second light source 20 or the third light source 30. Accordingly, the projection optical path can be divided into multiple paths for transmission, which reduces the mutual interference between the light with the fourth wavelength of the fourth light source 40 and the red light in the other three light sources, and ensures that lights are converged at the same position and then emitted.

In addition, according to the technical solution that lights emitted by the light sources of the auxiliary optical path 2 are sequentially emitted to the light of the main optical path 1, the lights emitted by the second light source 20, the third light source 30 and the fourth light source 40 in the auxiliary optical path 2 can be prevented from converging with each other, thereby reducing the convergent light. The light sources in the auxiliary optical path 2 are disposed around the main optical path 1, thereby simplifying the design of the optical path and allowing the projection optical path to be simpler. Furthermore, in the embodiment, the projection optical path is arranged in a strip shape, so that an installation space occupied by both sides of the main optical path 1 can be reduced.

Further, the excitation light emitted by the excitation light source 50 can improve the light emitting efficiency of the first light source 10, the second light source 20, the third light source 30 or the fourth light source 40, thereby increasing the emitting amount of light rays and correspondingly improving the brightness of the projection screen.

In the above embodiments, in order to ensure that the excitation light can be accurately emitted to the first light source 10 or the second light source 20, the main optical path 1 further includes a first beam splitter 710, the first beam splitter 710 is disposed at a crossing position between the light with the second wavelength and the light with the first wavelength, and the excitation light source 50 is disposed at a side of the first beam splitter 710 away from the second light source 20;
the first light source 10 is a green light source, a surface of the first beam splitter 710 facing the excitation light source 50 is provided with a reflective film for the excitation light, and the excitation light is reflected towards the first light source 10 through the first beam splitter 710; the excitation light is a blue light, the blue excitation light is emitted to the first light source 10 by reflected through the first beam splitter 710, so as to increase the fluorescent molecules of green light, thereby increasing the emitting amount of green light.

Alternatively, the second source 20 is a green light source, a surface of the first beam splitter 710 facing the excitation light source 50 is provided with an anti-reflecting film for the excitation light, and the excitation light is transmitted to the second light source 20. The blue excitation light is transmitted through the first beam splitter 710 and emitted to the second light source 20, so as to increase the fluorescent molecules of green light, thereby increasing the emitting amount of green light.

In the above embodiment, in order to effectively converge the light with the first wavelength and the light with the second wavelength, an emitting direction of the light with the second wavelength is orthogonal to an emitting direction of the light with the first wavelength, the first beam splitter 710 is disposed at a crossing position between the light with the second wavelength and the light with the first wavelength, a surface of the first beam splitter 710 facing the first light source 10 is provided with an anti-reflecting film for the light with the first wavelength, and a surface of the first beam splitter 710 facing the second light source 20 is provided with a reflective film for the light with the second wavelength. By means of transmitting the light with the first wavelength through the first beam splitter 710 and reflecting the light with the second wavelength through the first beam splitter 710, the light with the first wavelength and the light with the second wavelength are emitted from the same surface of the first beam splitter 710, and correspondingly the convergence of the light with the first wavelength and the light with the second wavelength is completed. Wherein, the anti-reflecting film for the light with the first wavelength and the reflective film for the light with the second wavelength may be disposed on the same surface of the first beam splitter 710 or on both surfaces of the first beam splitter 710 respectively.

In the above embodiment, in order to cause the light with the third wavelength to converge into the main optical path 1, the main optical path 1 further includes a second beam splitter 720, an emitting direction of the light with the third wavelength is orthogonal to an emitting direction of the light with the first wavelength, and the second beam splitter 720 is disposed at a crossing position between the light with the third wavelength and the light with the first wavelength, a surface of the second beam splitter 720 facing the first light source 10 is provided with an anti-reflecting film for the light with the first wavelength and the light with the second wavelength, and a surface of the second beam splitter 720 facing the third light source 30 is provided with a reflective film for the light with the third wavelength. By means of transmitting the light with the first wavelength and the light with the second wavelength through the second beam splitter 720 and reflecting the light with the third wavelength through the second beam splitter 720, the light with the first wavelength, the light with the second wavelength and the light with the third wavelength are emitted from the same surface of the second beam splitter 720, and correspondingly the convergence of the light with the third wavelength towards the light with the first wavelength is completed. Wherein, the anti-reflecting film for the light with the first wavelength and the light with the second wavelength and the reflective film for the light with the third wavelength may be disposed on the same surface of the second beam splitter 720 or on both surfaces of the second beam splitter 720 respectively.

In the above embodiment, the main optical path 1 further includes a third beam splitter 730, an emitting direction of the light with the fourth wavelength is orthogonal to an emitting direction of the light with the first wavelength, and the third beam splitter 730 is disposed at a crossing position between the light with the fourth wavelength and the light with the first wavelength; the main optical path 1 further includes a first light emitting end surface 910, the first light emitting end surface 910 is perpendicular to an emitting direction of the light with the first wavelength, the light with the first wavelength, the light with the second wavelength and the light with the third wavelength are transmitted through the third beam splitter 730, and the light with the fourth wavelength is reflected through the third beam splitter 730, the light with the first wavelength, the light with the second wavelength, the light with the third wavelength and the light with the fourth wavelength are converged by the third beam splitter 730, and the converged light of the light with the first wavelength, the light with the second wavelength, the light with the third wavelength and the light with the fourth wavelength is emitted from the first light emitting end surface 910. Thereby, lights of four types of wavelengths are converged, and the lights of four types of wavelengths are emitted from the same light emitting end surface.

For example, the light with the first wavelength is a green light, the light with the second wavelength is a blue light, and the light with the third wavelength is a red light, a surface of the third beam splitter 730 facing the first light source 10 is provided with an anti-reflecting film for the light with the first wavelength, the light with the second wavelength and the light with the third wavelength, a surface of the third beam splitter 730 facing the fourth light source 40 is provided with a reflective film for the light with the fourth wavelength, and λ1>λ2. The light with the first wavelength of green light has a wavelength range close to that of the light with the second wavelength of blue light, so that a higher transmittance can be obtained when they pass through the first beam splitter 710. The light with the first wavelength of green light, the light with the second wavelength of blue light and the light with the third wavelength of red light pass through the third beam splitter 730, and in the meanwhile, in order to avoid the phenomenon that the light with the fourth wavelength also passes through, the wavelength range of the light with the fourth wavelength shall exclude the wavelength range of the light with the first wavelength, the light with the second wavelength and the light with the third wavelength, therefore, the wavelength λ1 of the light with the fourth wavelength is greater than the wavelength λ2 of the light with the third wavelength. Wherein, the anti-reflecting film for the light with the first wavelength, the light with the second wavelength and the light with the third wavelength and the reflective film for the light with the fourth wavelength may be disposed on the same surface of the third beam splitter 730 or on both surfaces of the third beam splitter 730 respectively.

In the above embodiment, the main optical path 1 further includes a first condenser lens 810 and a second condenser lens 820, the first condenser lens 810 is disposed in an optical path between the first beam splitter 710 and the second beam splitter 720, and the second condenser lens 820 is disposed in an optical path between the second beam splitter 720 and the third beam splitter 730. Specifically, in order to reduce the diffusing of the light with the first wavelength and the light with the second wavelength, the projection optical path further includes a first condenser lens 810, the first condenser lens 810 is disposed in an optical path between the first beam splitter 710 and the second beam splitter 720. By means of the condensing effect of the first condenser lens 810, the light with the first wavelength and the light with the second wavelength can be converged, furthermore, the diffusing of the light with the first wavelength and the light with the second wavelength can be reduced while the light with the first wavelength and the light with the second wavelength are further mixed.

Further, the projection optical path includes a second condenser lens 820, the second condenser lens 820 is disposed in an optical path between the second beam splitter 720 and the third beam splitter 730, and the converged light of the light with the first wavelength, the light with the second wavelength and the light with the third wavelength are emitted to the second condenser lens 820. The light with the first wavelength, the light with the second wavelength and the light with the third wavelength can be further converged through the condensing effect of the second condenser lens 820 so as to reduce the diffusing of light ray.

Further, the projection optical path includes a number of collimating lens groups 60, the collimating lens group 60 is at least disposed in the light-emitting direction of one of the first light source 10, the second light source 20, the third light source 30 and the fourth light source 40, the corresponding light rays can be accurately emitted to corresponding positions through the collimating lens group 60. For example, the collimating lens group 60 includes a first collimating lens 610 and a second collimating lens 620, the first collimating lens 610 is disposed opposing to the corresponding light source, the second collimating lens is disposed opposing away from the corresponding light source, and the first collimating lens 610 and the second collimating lens 620 are any one of spherical lens, aspheric lens or free-form lens. The collimating lens group 60 may also include three collimating lenses, and the three collimating lenses may also be any one of spherical lens, aspheric lens or free-form lens.

In the above embodiment, the projection optical path includes a first light emitting end surface 910, the first light emitting end surface 910 is perpendicular to an emitting direction of the light with the first wavelength; the light with the first wavelength, the light with the second wavelength and the light with the fourth wavelength are transmitted through the third beam splitter 730, the light with the third wavelength is reflected through the third beam splitter 730; the light with the first wavelength, the light with the second wavelength, the light with the third wavelength and the light with the fourth wavelength are converged by the third beam splitter 730, and the converged light of the light with the first wavelength, the light with the second wavelength, the light with the third wavelength and the light with the fourth wavelength is emitted from the first light emitting end surface 910. Wherein, a surface of the third beam splitter 730 facing the first beam splitter 710 is provided with an anti-reflecting film for the light with the first wavelength, the light with the second wavelength and the light with the third wavelength, and a surface of the third beam splitter 730 facing the fourth light source 40 is provided with a reflective film for the light with the fourth wavelength. Accordingly, in a case where the light with the first wavelength, the light with the second wavelength and the light with the third wavelength are transmitted through the third beam splitter 730 and the light with the fourth wavelength is reflected by the third beam splitter 730, the light with the first wavelength, the light with the second wavelength, the light with the third wavelength and the light with the fourth wavelength can be converged and combined, and are emitted from the first light emitting end surface 910. Wherein, the anti-reflecting film for the light with the first wavelength, the light with the second wavelength and the light with the third wavelength and the reflective film for the light with the fourth wavelength are disposed on the same surface of the third beam splitter 730, or may be disposed on both surfaces of the third beam splitter 730 respectively.

In addition, the embodiment also provides another light emitting direction, the projection optical path includes a second light emitting end surface 920, the second light emitting end surface 920 is parallel to the emitting direction of the light with the first wavelength; the light with the first wavelength, the light with the second wavelength and the light with the third wavelength are reflected by the third beam splitter 730, the light with the fourth wavelength is transmitted through the third beam splitter 730; the light with the first wavelength, the light with the second wavelength, the light with the third wavelength and the light with the fourth wavelength are converged by the third beam splitter 730, and the converged light of the light with the first wavelength, the light with the second wavelength, the light with the third wavelength and the light with the fourth wavelength is emitted from the second light emitting end surface 920. Wherein, a surface of the third beam splitter 730 facing the first beam splitter 710 is provided with a reflective film for the light with the first wavelength, the light with the second wavelength and the light with the third wavelength, and a surface of the third beam splitter 730 facing the fourth light source 40 is provided with an anti-reflecting film for the light with the fourth wavelength. Accordingly, in a case where the light with the first wavelength, the light with the second wavelength and the light with the third wavelength are reflected by the third beam splitter 730 and the light with the fourth wavelength is transmitted through the third beam splitter 730, the light with the first wavelength, the light with the second wavelength, the light with the third wavelength and the light with the fourth wavelength are converged and combined, and are emitted from the second light emitting end surface 920. Wherein, the reflective film for the light with the first wavelength, the light with the second wavelength and the light with the third wavelength and the anti-reflecting film for the light with the fourth wavelength may be disposed on the same surface of the third beam splitter 730, or may be disposed on both surfaces of the third beam splitter 730, respectively.

Referring back to Fig. 1, in order to flexibly adjust the installation position of the projection optical path according to the installation space, the second light source 20, the third light source 30 and the fourth light source 40 are disposed on an upper side of an emitting optical path of the light with the first wavelength, and the excitation light source 50 is disposed on a lower side of the emitting optical path of the light with the first wavelength. In the embodiment, a space on the lower side of the emitting optical path of the light with the first wavelength can be effectively saved with respect to the third light source 30 and the fourth light source 40.

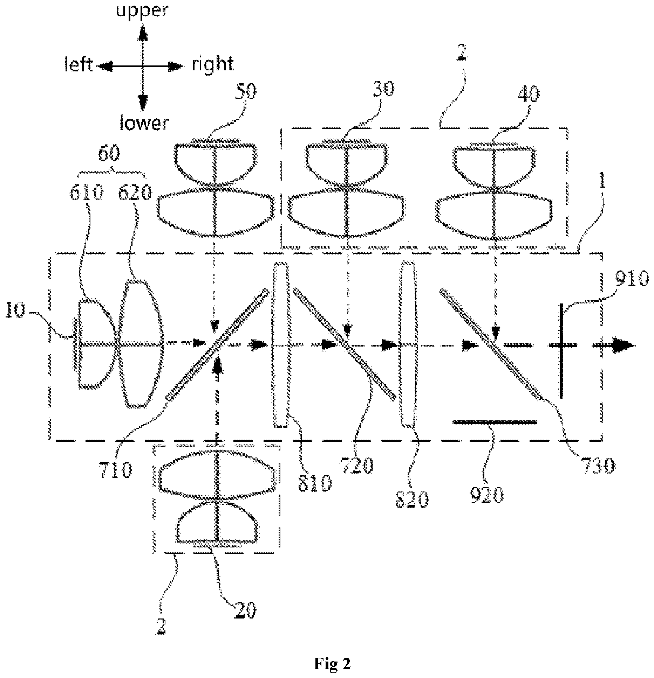

Referring to Fig. 2, the excitation light source 50, the third light source 30 and the fourth light source 40 are disposed on an upper side of the emitting optical path of the light with the first wavelength, and the second light source 20 is disposed on a lower side of the emitting optical path of the light with the first wavelength. In the embodiment, a space on the lower side of the emitting optical path of the light with the first wavelength may be effectively saved with respect to the third light source 30 and the fourth light source 40.

Referring to Fig. 3, the second light source 20 and the fourth light source 40 are disposed on an upper side of an emitting optical path of the light with the first wavelength, and the excitation light source 50 and the third light source 30 are disposed on a lower side of the emitting optical path of the light with the first wavelength. In the embodiment, a space on the upper side of the emitting optical path of the light with the first wavelength may be effectively saved with respect to the third light source 30, and a space on the lower side of the emitting optical path of the light with the first wavelength may be effectively saved with respect to the fourth light source 40.

Referring to Fig. 4, the second light source 20 and the third light source 30 are disposed on an upper side of an emitting optical path of the light with the first wavelength, and the excitation light source 50 and the fourth light source 40 are disposed on a lower side of the emitting optical path of the light with the first wavelength. In the embodiment, a space on the lower side of the emitting optical path of the light with the first wavelength may be effectively saved with respect to the third light source 30, and a space on the upper side of the emitting optical path of the light with the first wavelength may be effectively saved with respect to the fourth light source 40.

The present disclosure also provides a projection device. The projection device includes a housing and the above-mentioned projection optical path, wherein the projection optical path is disposed in the housing. The housing has an installation space, the projection optical path is arranged in the installation space, and the housing can protect the projection optical path and reduce the probability that the optical components in the projection optical path are damaged. In the meanwhile, the housing can also prevent dust from falling into the projection optical path, thereby reducing the influence of dust on the projection optical path. In addition, the housing can also be waterproof, reducing liquids such as rainwater or sweat from penetrating into the projection optical path, so as to prevent that the optical components in the projection optical path are corroded by the liquid.

The various embodiments in this specification are described in a parallel or progressive manner, and each embodiment focuses on the differences from other embodiments, and the same or similar parts between the various embodiments may be referred to each other. As for the device disclosed in the embodiment, since it corresponds to the method disclosed in the embodiment, the description is relatively simple. For relevant parts, please refer to the description of the method.

Those of ordinary skill in the art will understand that the units and algorithm steps of each example described in conjunction with the embodiments disclosed herein can be implemented by electronic hardware, computer software, or a combination thereof. In order to clearly explain the interchangeability of hardware and software, the composition and steps of each example have been generally described in the above description in terms of function. Whether these functions are performed in hardware or software depends on the specific application and design constraints of the embodiment. Those skilled in the art may implement the described functions for each specific application using different methods, but such implementations should not be considered beyond the scope of the present application.

The steps of the method or algorithm described in connection with the embodiments disclosed herein may be directly implemented by hardware, a software module executed by a processor, or a combination thereof. The software module may be disposed in a random access memory (RAM), a memory, a read only memory (ROM), an electrically programmable ROM, an electrically erasable programmable ROM, a register, a hard disk, a removable disk, a CD-ROM, or any other form of storage medium known in the art.

It should be noted that relational terms such as first and second described herein are only used to distinguish one entity or operation from another entity or operation, and do not necessarily require or imply any such actual relationship or order between these entities or operations. Moreover, terms such as "comprise", "include" or any other variation thereof are intended to encompass a non-exclusive inclusion such that a process, method, article or apparatus that includes a series of elements includes not only those elements, but also other elements not explicitly listed, or elements inherent to such a process, method, article or apparatus. Without further limitation, the element defined by the phrase "comprising a..." does not preclude the presence of additional identical elements in the process, method, article or apparatus including the element.

## Claims

1. A projection optical path, wherein, the projection optical path comprises:
a main optical path comprising a first light source emitting light with a first wavelength;
an auxiliary optical path comprising a second light source emitting light with a second wavelength, a third light source emitting light with a third wavelength and a fourth light source emitting light with a fourth wavelength, wherein the light with the second wavelength, the light with the third wavelength and the light with the fourth wavelength are sequentially converged into the light with the first wavelength along an emitting direction of the light with the first wavelength, the light with the first wavelength, the light with the second wavelength and the light with the third wavelength have different colors, the light with the first wavelength, the light with the second wavelength and the light with the third wavelength are one of red light, green light and blue light, respectively, a wavelength range of the light with the fourth wavelength is within a wavelength range of the red light, a wavelength of the light with the fourth wavelength is defined as λ1, a wavelength of the red light among the light with the first wavelength, the light with the second wavelength and the light with the third wavelength is defined as X2, and λ1≠λ2; and
an excitation light source emitting an excitation light, wherein the excitation light is emitted to the first light source, the second light source, the third light source or the fourth light source.

2. The projection optical path of claim 1, wherein the main optical path further comprises a first beam splitter, the first beam splitter is disposed at a crossing position of the light with the second wavelength and the light with the first wavelength, and the excitation light source is disposed at a side of the first beam splitter away from the second light source; and
wherein the first light source is a green light source, a surface of the first beam splitter facing the excitation light source is provided with a reflective film for the excitation light, and the excitation light is reflected towards the first light source through the first beam splitter; or
wherein the second source is a green light source, a surface of the first beam splitter facing the excitation light source is provided with an anti-reflecting film for the excitation light, and the excitation light is transmitted towards the second light source.

3. The projection optical path of claim 2, wherein an emitting direction of the light with the second wavelength is orthogonal to an emitting direction of the light with the first wavelength, the first beam splitter is disposed at a cross position of the light with the second wavelength and the light with the first wavelength, a surface of the first beam splitter facing the first light source is provided with an anti-reflecting film for the light with the first wavelength, and a surface of the first beam splitter facing the second light source is provided with a reflective film for the light with the second wavelength.

4. The projection optical path of claim 2, wherein the main optical path further comprises a second beam splitter, an emitting direction of the light with the third wavelength is orthogonal to an emitting direction of the light with the first wavelength, the second beam splitter is disposed at a cross position of the light with the third wavelength and the light with the first wavelength, a surface of the second beam splitter facing the first light source is provided with an anti-reflecting film for the light with the first wavelength and the light with the second wavelength, and a surface of the second beam splitter facing the third light source is provided with a reflective film for the light with the third wavelength.

5. The projection optical path of claim 4, wherein the main optical path further comprises a third beam splitter, an emitting direction of the light with the fourth wavelength is orthogonal to an emitting direction of the light with the first wavelength, the third beam splitter is disposed at a cross position of the light with the fourth wavelength and the light with the first wavelength, the main optical path further comprises a first light emitting end surface, the first light emitting end surface is perpendicular to an emitting direction of the light with the first wavelength, the light with the first wavelength, the light with the second wavelength and the light with the third wavelength are transmitted through the third beam splitter, the light with the fourth wavelength is reflected by the third beam splitter, the light with the first wavelength, the light with the second wavelength, the light with the third wavelength and the light with the fourth wavelength are converged by the third beam splitter, and the converged light of the light with the first wavelength, the light with the second wavelength, the light with the third wavelength and the light with the fourth wavelength is emitted from the first light emitting end surface.

6. The projection optical path of claim 5, wherein the light with the first wavelength is a green light, the light with the second wavelength is a blue light, the light with the third wavelength is a red light, a surface of the third beam splitter facing the first light source is provided with an anti-reflecting film for the light with the first wavelength, the light with the second wavelength and the light with the third wavelength, a surface of the third beam splitter facing the fourth light source is provided with a reflective film for the light with the fourth wavelength, and λ1>λ2.

7. The projection optical path of any one of claims 1-6, wherein the second light source, the third light source and the fourth light source are disposed on an upper side of an emitting optical path of the light with the first wavelength, and the excitation light source is disposed on a lower side of the emitting optical path of the light with the first wavelength.

8. The projection optical path of any one of claims 1-6, wherein the excitation light source, the third light source and the fourth light source are disposed on an upper side of an emitting optical path of the light with the first wavelength, and the second light source is disposed on a lower side of the emitting optical path of the light with the first wavelength.

9. The projection optical path of any one of claims 1-6, wherein the second light source and the fourth light source are disposed on an upper side of an emitting optical path of the light with the first wavelength, and the excitation light source and the third light source are disposed on a lower side of the emitting optical path of the light with the first wavelength.

10. The projection optical path of any one of claims 1-6, wherein the second light source and the third light source are disposed on an upper side of an emitting optical path of the light with the first wavelength, and the excitation light source and the fourth light source are disposed on a lower side of the emitting optical path of the light with the first wavelength.

11. A projection device, wherein, the projection device comprises a housing and the projection optical path of any one of claims 1-10, the projection optical path is disposed in the housing.
